# EUROPEAN PATENT SPECIFICATION

(11) **EP 0 403 022 B1**
(45) Date of publication and mention of the grant of the patent: **13.11.1996**
(21) Application number: 90201516.3
(22) Date of filing: 12.06.1990
(51) Int. Cl.: C08G 59/06, C08G 59/62, C08L 63/02, H01B 3/40, H01L 23/29

(54) **Encapsulating epoxy resin composition**
Epoxyharzzusammensetzung zum Einkapseln
Composition de résine époxy pour encapsulation

(30) Priority: 13.06.1989 JP 148282/89; 13.06.1989 JP 148283/89
(43) Date of publication of application: 19.12.1990
(73) Proprietor: SHELL INTERNATIONALE RESEARCH MAATSCHAPPIJ B.V., 2596 HR Den Haag (NL)
(72) Inventor: Konishi, Isako, Yokkaichi City, Mie Prefecture (JP); Murata, Yasuyuki, Yokkaichi City, Mie Prefecture (JP); Tanaka, Ryohei, Yokkaichi City, Mie Prefecture (JP); Nakanishi, Yoshinori, Suzuka City, Mie Prefecture (JP)

(56) References cited:
- EP-A- 0 213 592
- EP-A- 0 235 990
- PATENT ABSTRACTS OF JAPAN vol. 13, no. 236 (C- 602)(3584), 30 May 1989
- PATENT ABSTRACTS OF JAPAN vol. 10, no. 208 (C- 361)(2264), 22 July 1986
- PATENT ABSTRACTS OF JAPAN vol. 13, no. 262 (C- 608)(3610), 16 June 1989

## Description

The present invention relates to epoxy resin compositions for encapsulating semiconductors, which retain the excellent reactivity featured by phenol-curing novolak-type epoxy resin, while providing a cured product having a higher glass transition point as well as an excellent crack resistance, particularly high-temperature crack resistance, yet retaining an excellent reactivity.

In recent years, high integration technology has made a big advance, with enlargement in size of semiconductive elements being remarkably developed. When such semiconductive elements are to be directly encapsulated with epoxy resin, the encapsulating material is unavoidably brought into contact with the encapsulated elements, while the moulded elements are exposed to contraction in the curing procedure and thermal contraction in the cooling procedure, resulting in internal stress generating therein. Such an internal stress will cause displacement of aluminium pattern, cutting of bonding wires or crack formation in packages in themselves, thus resulting in defective products.

Further, with the miniaturization and thin-gauging trend in the manufacture of electronic components, the actual mounting of semiconductive elements onto substrates has transferred to a surface mounting method. In the actual mounting, semiconductive devices are directly immersed in soldering bath, thus treated at high temperatures, therefore, crack formation is liable to take place in the encapsulating material, which poses a serious technological problem to solve.

It is well known in the art that bisphenol-type epoxy resin can provide cured products having a less internal stress during encapsulation process, exhibiting excellent crack resistance during soldering treatment. However, bisphenol-type epoxy resin exhibits crystallizability with a higher softening point, therefore its handleability is rather poor, while the melting viscosity is very low with lower reactivity so that when it is subjected to transfer moulding, flashes are formed disadvantageously.

In addition, it is known that for encapsulating semiconductors epoxy resin compositions can be used which basically consist, in view of their thermal resistance, electrical characteristics and water resistance, of novolak-type epoxy resin as epoxy resin, phenol novolak-type resin as curing agent, and powdery silica as filler.

However, when semiconductive bodies are encapsulated with the above-mentioned type of epoxy resin compositions, this poses the problem that when the thus encapsulated bodies are subjected to a heat cycle test or to heating in soldering onto integrated boards, cracking of the bodies or chips is likely to occur, thereby deteriorating the reliability of semiconductive parts.

This problem was solely derived from the use of novolak-type epoxy resin as epoxy resin, resulting in hardness of the cured products, and thus poor flexibility at high temperature.

To solve the above-mentioned problems it has been proposed to formulate flexibilizer for example, with the epoxy resin compositions. However, when a known flexibilizer was formulated, crack resistance at high temperature was found to be insufficient in the cured products.

Further, in place of novolak-type epoxy resin, use may be made of biphenyl-type epoxy resin to improve the crack resistance, but when biphenyl-type epoxy resin is cured with the conventional phenol novolak resin, not only the cure rate becomes lower due to the bifunctionality of biphenyl-type epoxy resin but also the glass transition point (Tg) of the cured products undesirably turns out to be lower.

If the cure rate is low, the encapsulating rate for semiconductive bodies will decrease, resulting in poor productivity, while when the glass transition point (Tg) of the cured products is lower, a problem will arise that when the cured products are removed from the moulds, deformation of the products is likely to take place.

In JP-A-61047725 encapsulating epoxy resin composition are described comprising certain biphenol-type epoxy resins, a phenol novolak resin hardener, a curing accelerator and an inorganic filler.

The present invention relates to epoxy resin compositions for encapsulating semiconductors according to the present invention are characterized by comprising:
(a) 100 parts by weight of epoxy resin containing at least 20% by weight of bishydroxybiphenyl type epoxy resin represented by the general formula: 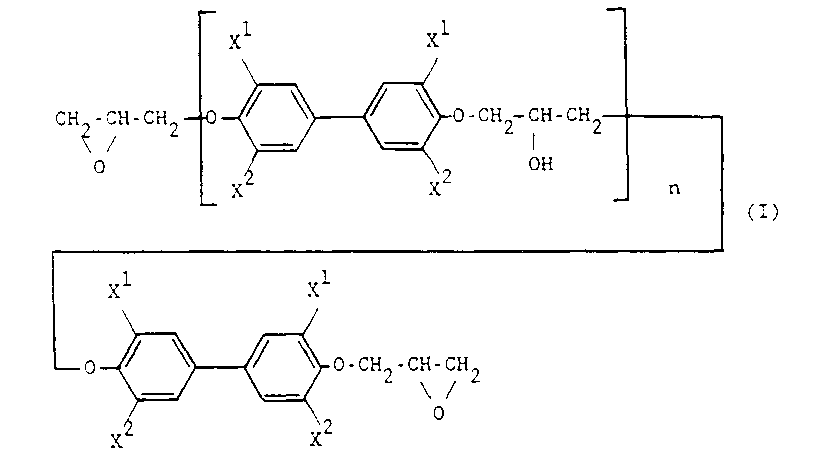 wherein X¹ and X² each independently represent a hydrogen atom, halogen atom or C₁₋₅ alkyl group, and n is a number of 0 to 3 on average,
(b) 20 to 200 parts by weight of phenolic curing agent containing at least 20% by weight of a polyphenol that can be obtained by condensing phenols with aromatic aldehydes or aromatic ketones having phenolic hydroxyl groups, and optionally
(c) curing accelerator, and
(d) inorganic filler.

The epoxy resin (a) employed in the present epoxy resin compositions is an epoxy resin containing at least 20% by weight of a bishydroxyphenyl type epoxy resin represented by the above-mentioned general formula (I). Namely, this epoxy resin (a) may consist only of the above-mentioned epoxy resin (I) or a mixture of the above-mentioned epoxy resin (I) with other epoxy resing or resins but in case of a mixture, the content of the above-mentioned epoxy resin (I) must be 20% by weight or higher.

The bishydroxyphenyl-type epoxy resin represented by the above-mentioned general formula (I) can be easily obtained by reacting bishydroxy-biphenyls represented by the following general formula: 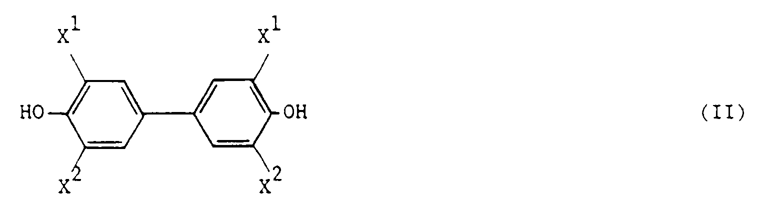 wherein X¹ and X² each independently represent a hydrogen atom, halogen atom or C₁₋₅ alkyl group, with a more than stoichiometric amount of epihalohydrine.

As the bishydroxy-biphenyls (II) employed in the above-mentioned reaction may be mentioned, for example,
4,4′-bishydroxybiphenyl;
4,4'-bishydroxy-3,3',5,5'-tetramethylbiphenyl;
4,4'-bishydroxy-3,3',5,5'-tetramethyl-2-chlorobiphenyl;
4,4'-bishydroxy-3,3',5,5'-tetramethyl-2-bromobiphenyl; and
4,4'-bishydroxy-3,3',5,5'-tetraethylbiphenyl.

For this reaction two methods may be suitably applied, viz.,
(i) a one-step reaction for producing the epoxy resin (I) by reacting bishydroxybiphenyls (II) with a more than stoichiometric amount of epihalohydrine in the presence of alkali metal hydroxide, so as to simultaneously effect the addition reaction of the epihalohydrine to the bishydroxybiphenyls and ring-closure reaction for forming epoxy rings, and
(ii) a two-step reaction for producing the epoxy resin (I) by carrying out an addition reaction of bishydroxybiphenyl with a more than stoichiometric amount of epihalohydrine in the presence of a basic catalyst, followed by a ring-closure reaction with the addition of alkali metal hydroxide thereto.

As epihalohydrine employed in the above reaction process may be mentioned epichlorohydrine and epibromohydrine but in general the former is preferably used.

As suitable alkali metal hydroxides may be mentioned, for example, caustic potash and caustic soda; they are added in the form of either solid or in 40 to 50% aqueous solution to the reaction system.

Further, as the basic catalysts to be employed in the above-mentioned reaction processes, use may be made, for example, of quaternary ammonium salts such as tetramethylammonium chloride; tetramethylammonium bromide; triethylmethylammonium chloride; tetraethylammonium iodide; and cetyltriethylammonium bromide.

As regards the bishydroxybiphenyl-type epoxy resin (I) obtained by the above-mentioned processes, even if epihalohydrine is used in a highly excessive amount, a resin mixture is obtained, comprising not only the epoxy resin having the above-mentioned general formula (I) wherein n is zero but also the epoxy resin having from 1 to 5 as the value of n. If the average value of n in the general formula (I) falls in the range of from 0 to 3, preferably from 0 to 2, the epoxy compound is used.

As has been mentioned before, the epoxy resin (a) comprises at least 20% by weight of such bishydroxybiphenyl-type epoxy resin (I).

If the content of the epoxy resin (I) is less than 20% by weight, crack resistance, the excellent technical effect created by the present invention cannot be satisfactorily attained in the cured products.

As other epoxy resins that may be combined with the bishydroxybiphenyl-type epoxy resin (I) of the present invention, use may be made of such epoxy resins that have been prepared from epihalohydrine and various kinds of phenols such as, for example, bisphenol A; bisphenol F; resorcine; hydroquinone; methylresorcine; phenol novolak; cresol novolak; resorcine novolak; and bisphenol A novolak, and phenol bromides such as bisphenol A tetrabromide and phenol novolak bromide as well as tri-functional or tetra-functional epoxy resin represented by the general formula: 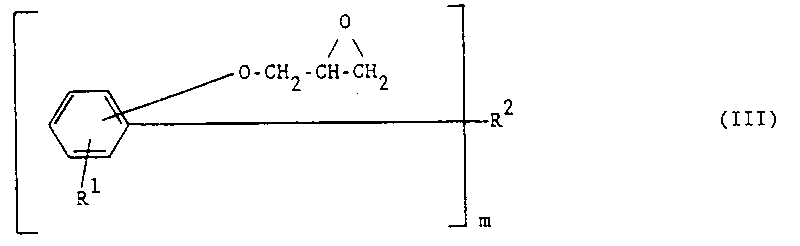 wherein m is an integer of 3 or 4, and R¹ and R² each represent a C₁₋₁₀ hydrocarbon group.

The epoxy resin compositions according to the present invention comprise, as component (b), a phenol-type curing agent containing at least 20% by weight of a polyphenol that can be obtained from condensation reaction of phenols with phenolic hydroxyl group-containing aromatic aldehydes or aromatic ketones.

The said polyphenolic component of the above-mentioned phenolic curing agent (b) can be obtained by carrying out condensation reaction of one mol of phenols with from 0.1 to 3.0 moles, preferably from 0.2 to 1.0, of phenolic hydroxyl group-containing aromatic aldehydes or aromatic ketones in the presence of an acidic catalyst at a temperature in the range of from 40 to 200 °C for a reaction time of from 1 to 12 hours.

As suitable phenols use may be made, for example, of phenol, cresol, xylenol, ethylphenol, butylphenol, phenylphenol, nonylphenol, butylcresol, bromophenol, chlorophenol, hydroquinone, resorcinol, bisphenol A, bisphenol F, and biphenol.

These phenols may be used as such individually or in combinations of two or more in the above-mentioned production processes.

As suitable phenolic hydroxyl group-containing aromatic aldehydes and aromatic ketones may be mentioned, for example, hydroxybenzaldehyde, methylhydroxybenzaldehyde, methoxyhydroxybenzaldehyde, hydroxyacetophenone and hydroxyphenylethylketone.

As acidic catalysts employed in the above-mentioned condensation reaction, use may be made, for example, of inorganic acids such as hydrochloric acid, sulphuric acid, organic acids such as oxalic acid and toluene sulphonic acid and other acidic catalysts for use in ordinary novolak resin production such as acid-exhibiting organic acid salts.

The amount of such acidic catalysts employed in the reaction is conveniently from 0.1 to 5 parts by weight per 100 parts by weight of phenols.

The phenolic curing agents defined under component (b) according to the epoxy resin compositions are those which essentially comprise the polyphenol obtainable from the above-mentioned reaction, preferably those having molecular weight in the range of from 290 to 30,000.

Namely, the phenolic curing agents as defined under (b) according to the present epoxy resin compositions comprise at least 20% by weight, preferably 40% by weight of the above-mentioned polyphenol. If such a phenol content is considerably lower, the excellent technical effect such as excellent reactivity and thermal resistance, aimed at by the present epoxy resin compositions cannot be sufficiently exhibited.

The blending ratio of the epoxy resin (a) with the phenolic curing agent (b) according to the preferred epoxy resin compositions is such that use is made of from 20 to 200 parts by weight of the phenolic curing agent (b) per 100 parts by weight of the epoxy resin (a). Preferably, the blending ratio is from 0.5 to 2.0, preferably about one phenolic hydroxyl group in the phenolic curing agent (b) per epoxy group in the epoxy resin (a).

Next, the preferred epoxy resin compositions optionally comprise a curing accelerator (c) that is used for accelerating the reaction of the epoxy resin (a) with the phenolic curing agent (b), thus resulting in speedy curing rate thereof. As curing accelerators may be mentioned tertiary amines such as 2-(dimethylaminomethyl) phenol; 2,4,6-tris(dimethylaminomethyl) phenol; benzyldimethylamine; α-methylbenzyldimethylamine; imidazoles such as, for example, 2-methylimidazole; 2-phenylimidazole; 2-undecylimidazole; 2-heptadecylimidazole and 2-ethyl-4-methylimidazole; and phosphines such as triphenyl phosphine. The blending ratio of the curing accelerator in the present compositions is conveniently from 0.02 to 1.0% by weight based on the epoxy resin compositions.

Further, the preferred epoxy resin compositions optionally comprise inorganic fillers defined above under (d). As such fillers, use may be made of any conventional inorganic fillers that are generally formulated with epoxy resin. As specific examples may be mentioned fused silica powder, crystalline silica powder, quartz glass powder, talc, calcium silicate powder, zirconium silicate powder, alumina powder, calcium carbonate powder, clay powder, barium sulphate powder and glass fibers.

Silica powder is preferably used. These inorganic fillers may be used alone or in combination to be suitably incorporated in the compositions.

The blending ratio of the inorganic fillers (d) is generally selected such as enabling to impart to the cured products, the desired modulus of elasticity, coefficient of linear expansion and glass transition point and usually in the range of from 50 to 90% by weight based on the resin compositions, though it may vary more or less depending on the kind of inorganic fillers used.

When the blending ratio is less than 50% by weight, the coefficient of linear expansion of the cured products will become greater, whereas when it exceeds 90% by weight, the fluidity of the resin compositions will be lowered to become difficult to handle.

The present epoxy resin compositions, if necessary, may also comprise additives such as, for example, mould-release agent, colourant, coupling agent and fire retardant. As mould release agents may be mentioned, for example, natural wax, higher fatty acids, metal salts of higher fatty acids and paraffins. As colourant is mentioned carbon black, for example, and, as fire retardant are mentioned antimony trioxide, antimony pentoxide, phosphorus and phosphorus compounds.

The preparation of the preferred epoxy resin compositions may usually be carried out by mixing the above-mentioned respective essential components (a) to (d) with or without any other optional components under heat melting but the order in which the respective components are mixed is not important.

The present invention will be further explained in more details, referring to examples directed to the production of epoxy resin, polyphenol; as well as the working example of the present compositions and comparative examples therewith.

### Example 1

### Production of epoxy resin I-1

Into a 5 l. three neck flask equipped with a stirrer, a thermometer and a cooler were charged 4,4'-bishydroxy-3,3',5,5'-tetramethylbiphenyl (242 g, 1.0 mol), epichlorohydrine (2,220 g, 24 mols) and tetramethylammonium chloride (1.9 g), so as to effect the addition reaction thereof under heat-refluxing for two hours. Then, the content of the flask was cooled to 60 °C and, after a moisture remover having been equipped therewith, sodium hydroxide (88 g, 2.2 mols) was added to the content so as to effect the ring closure reaction thereof at a reaction temperature in the range of from 55 to 60 °C and a reduced pressure in the range of from 13.3 to 20.0 kPa (100 to 150 mmHg), while the resulting water having been continuously and azeotropically removed. The instant at which the amount of the resulting water reached 3.6 ml was decided to be completion of the reaction (after about two hours).

After the reaction product having been filtered under reduced pressure, the filtered product was repeatedly washed with water in a mixer so as to remove common salt therefrom, while the filtrate was distilled at reduced pressure to recover the unreacted epichlorohydrine therefrom.

As the result, 4,4'-bis(2,3-epoxypropoxy)-3,3',5,5'-tetramethylbiphenyl having an epoxy equivalent of 185 g/eq. and a melting point of 105 °C was obtained in a solid form having light yellow colour and in the yield of 330 g. This compound had the above-mentioned general formula (I) wherein n was 0.06 on average. This compound will be called as "Epoxy resin I-1" hereinafter.

### Example 2

### Production of epoxy resin I-2

In place of the 4,4'-bishydroxy-3,3',5,5'-tetramethylbisphenyl used in the above-mentioned production of Epoxy resin I-1, use was made of 4,4'-bishydroxybiphenyl (186 g, 1.0 mol), while in the other points a reaction similar to that used in the production of Epoxy resin I-1 was carried out, thus forming 4,4'-bis(2,3-epoxypropoxy)-biphenyl (27.3 g) having an epoxy equivalent of 157 g/eq. and a melting point of 151 °C in the solid form having a light yellow colour. This compound had the above-mentioned general formula (I) wherein n was 0.04 on average. This compound will be called "Epoxy resin I-2" hereinafter.

### Example 3

### Production of polyphenol A¹

Into a 5 l. four neck flask equipped with a thermometer, a stirrer and a cooler were charged phenol (3,290 g), p-hydroxybenzaldehyde (854 g), and p-toluene sulphonic acid (8.5 g) so as to effect the reaction thereof at 150 °C for five hours. Then, the reaction mixture was further subjected to condensation reaction under heating at reduced pressure in the range of from 6.7 to 10.7 kPa (50 to 80 mmHg), while the water formed and the unreacted phenol were being continuously removed from the reaction system. When the thus formed water reached an amount of 123 g, the reaction pressure was lowered to a value of 67 to 133 kPa (0.5 to 1 mmHg), thereby completely removing the excessive phenol from the reaction system, spending one hour. Thus, the aimed polyphenol was obtained with the yield of 1,750 g, in the form of a red brown coloured solid having a softening point of 118 °C and a hydroxyl group equivalent of 99.

### Example 4

### Production of polyphenol A²

In place of the phenol and p-hydroxybenzaldehyde used in the above-mentioned production of polyphenol A¹, use was made of o-cresol (3,024 g) and p-hydroxyacetophenone (952 g), respectively, while in the other points, a reaction similar to that of the producing polyphenol A¹ was carried out, thus forming polyphenol.

Polyphenol was obtained in the yield of 2,000 g, exhibiting a softening point of 104 °C and a hydroxyl group equivalent of 108.

### Examples 5 to 9 and Comparative Examples 1 to 3

Table 1 shows a plurality of compositions containing various resin formulations indicated therein, wherein each of the resin formulations was subjected to melt mixing with the use of a mixing roll at a temperature in the range of from 90 to 110 °C for a period of five minutes, and then the thus melt mixed mixture was taken out in the form of a sheet therefrom, which was cooled and then crushed to form various kinds of epoxy resin compositions for moulding use.

With the use of each of the thus prepared resin compositions as well as a low pressure transfer moulding machine, a plurality of bending test pieces were prepared at a mould temperature of 180 °C and a moulding time of 180 seconds, whereas a plurality of flat plastic packages (44 pin FPP) encapsulating dummy elements were prepared which are heated to cure at 180 °C for eight hours.

The glass transition points, thermal resistance under soldering and bending modulus were determined on each of the moulded products, the results of which are shown in Table 1.

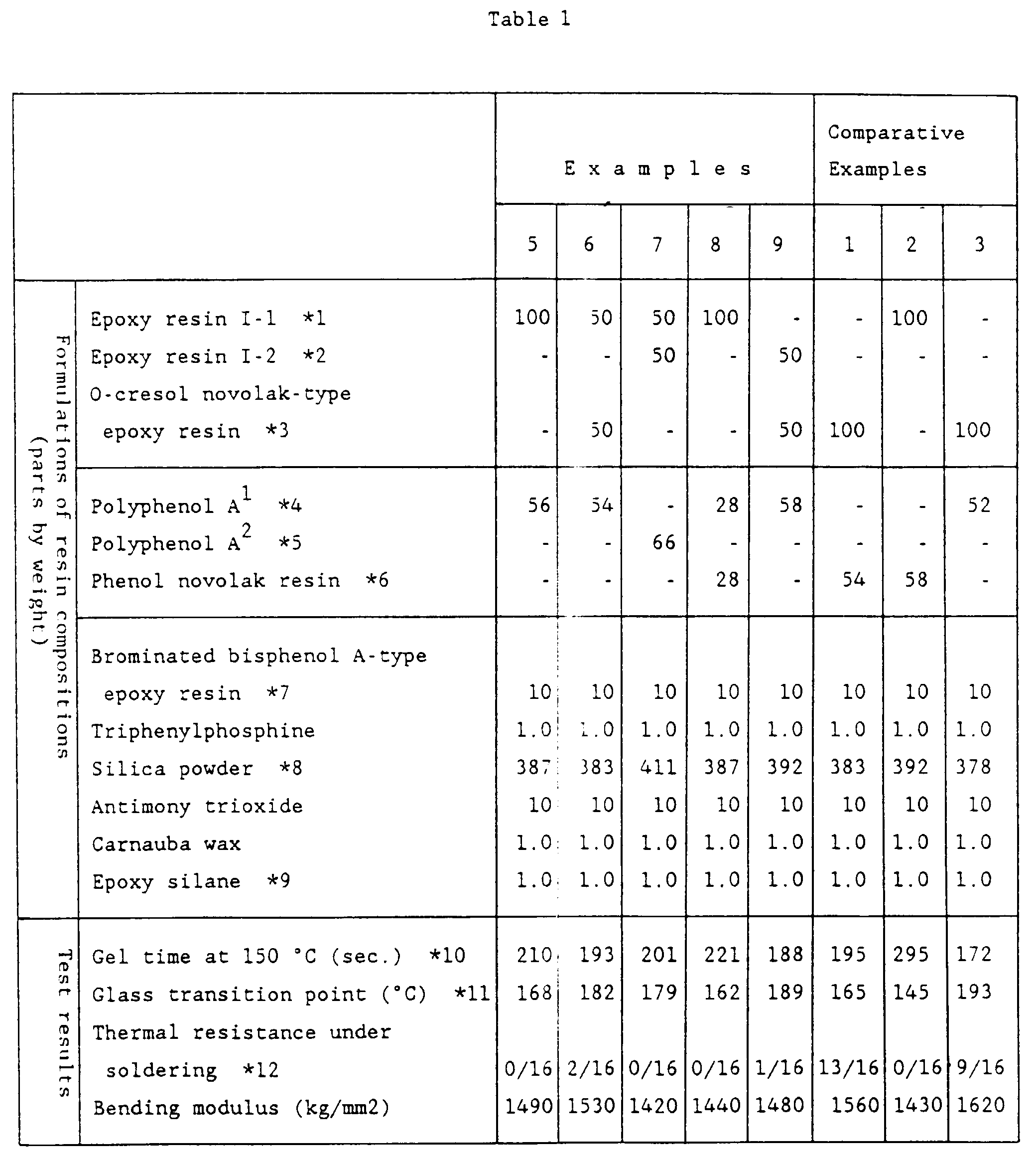

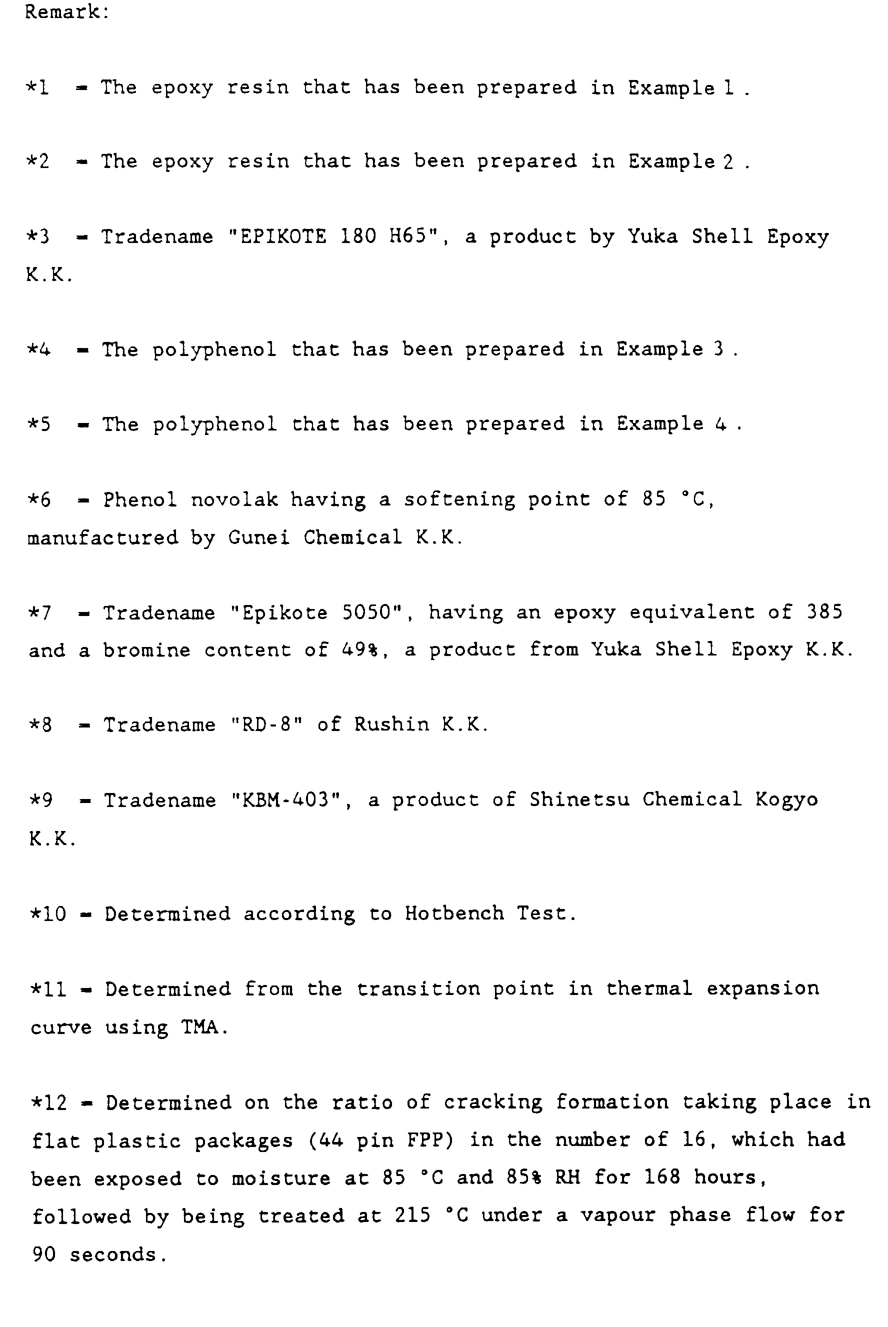

## Claims

1. Encapsulating epoxy resin composition, comprising (a) 100 parts by weight of epoxy resin containing at least 20% by weight of bishydroxybiphenyl series epoxy resin represented by the general formula (I) 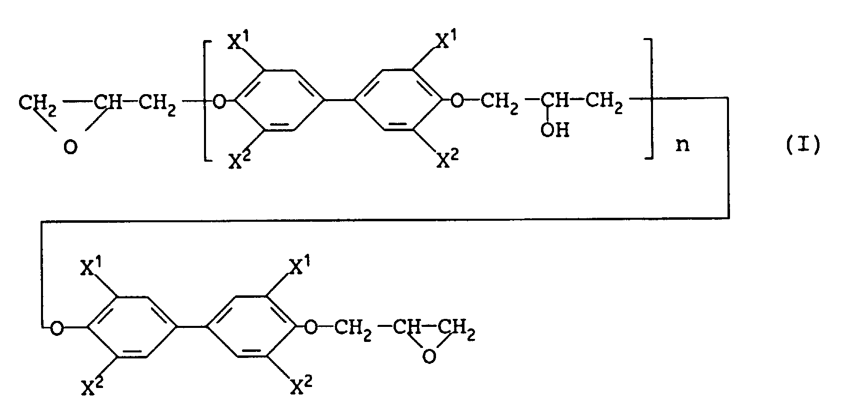 wherein X¹ and X² each independently represent a hydrogen atom, halogen atom or C₁₋₅ alkyl group and n is a number of from 0 to 3 on average, (b) 20 to 200 parts by weight of phenolic curing agent containing at least 20% by weight of a polyphenol obtainable by condensing phenols with aromatic aldehydes or aromatic ketones having phenolic hydroxyl groups, and optionally (c) curing accelerator, and (d) inorganic filler.

2. Composition according to claim 1, wherein the polyphenol of (b) is obtainable by a condensation reaction of one mol of phenols with from 0.1 to 3.0 moles, preferably from 0.2 to 1.0 of phenolic hydroxyl group-containing aromatic aldehydes or aromatic ketones in the presence of an acidic catalyst at a temperature in the range of from 40 to 200 °C for a reaction time of from 1 to 12 hours.

3. Composition according to any one of claim 1 or 2, wherein the phenol to be condensed is selected from phenol, cresol, xylenol, ethylphenol, butylphenol, phenylphenol, nonylphenol, butylcresol, bromophenol, chlorophenol, hydroquinone, resorcinol, bisphenol A, bisphenol F, and biphenol.

4. Composition according to any one of claims 1 to 3, wherein the phenolic hydroxyl group-containing aromatic aldehyde or aromatic ketone is selected from hydroxybenzaldehyde, methylhydroxybenzaldehyde, methoxyhydroxybenzaldehyde, hydroxyacetophenone and hydroxyphenylethylketone.

5. Composition according to any one of claims 1 to 4, wherein as inorganic filler, silica powder is used.

## Patentansprüche

1. Epoxidharzvergußmasse, enthaltend (a) 100 Gewichtsteile Epoxidharz, das mindestens 20 Gew.-% eines Epoxidharzes der Bishydroxydiphenyl-Reihe der allgemeinen Formel (I) 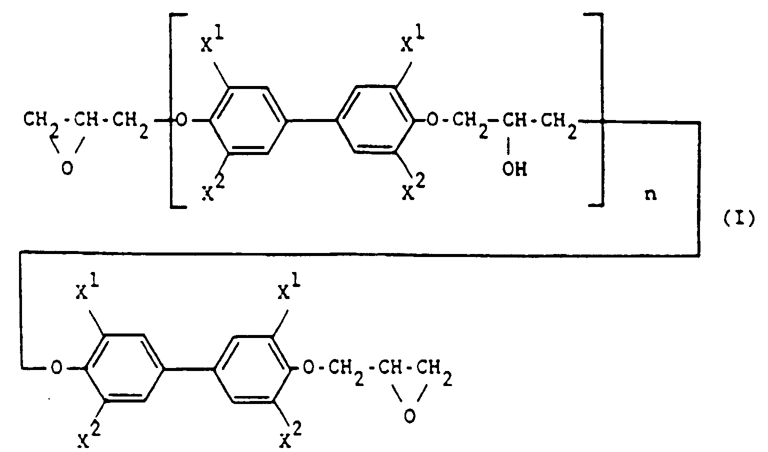 worin X¹ und X² unabhängig voneinander jeweils ein Wasserstoffatom, ein Halogenatom oder eine C₁₋₅-Alkyl-gruppe bedeuten und n im Mittel eine Zahl von 0 bis 3 ist, enthält, (b) 20 bis 200 Gewichtsteile phenolisches Härtungsmittel, das mindestens 20 Gew.-% eines durch Kondensation von Phenolen mit phenolische Hydroxylgruppen enthaltenden aromatischen Aldehyden oder aromatischen Ketonen erhältlichen Polyphenols enthält, sowie gegebenenfalls (c) Härtungsbeschleuniger und (d) anorganischen Füllstoff.

2. Masse nach Anspruch 1, wobei das Polyphenol gemäß (b) durch eine Kondensationsreaktion von einem Mol an Phenolen mit 0,1 bis 3,0 Mol, vorzugsweise 0,2 bis 1,0, phenolische Hydroxylgruppen enthaltenden aromatischen Aldehyden oder aromatischen Ketonen in Gegenwart eines sauren Katalysators bei einer Temperatur im Bereich von 40 bis 200°C und einer Reaktionszeit von 1 bis 12 Stunden erhältlich ist.

3. Masse nach einem der Ansprüche 1 oder 2, wobei man das zu kondensierende Phenol unter Phenol, Kresol, Xylenol, Ethylphenol, Butylphenol, Phenylphenol, Nonylphenol, Butylkresol, Bromphenol, Chlorphenol, Hydrochinon, Resorcin, Bisphenol A, Bisphenol F und Biphenol auswählt.

4. Masse nach einem der Ansprüche 1 bis 3, wobei man das phenolische Hydroxylgruppen enthaltende aromatische Aldehyd oder aromatische Keton unter Hydroxy-benzaldehyd, Methylhydroxybenzaldehyd, Methoxyhydroxy-benzaldehyd, Hydroxyacetophenon und Hydroxyphenylethyl-keton auswählt.

5. Masse nach einem der Ansprüche 1 bis 4, wobei man als anorganischen Füllstoff Siliciumdioxidpulver verwendet.

## Revendications

1. Composition de résine époxy pour encapsulation, comprenant (a) 100 parties en poids de résine époxy contenant au moins 20% en poids de résine époxy de la série bishydroxybiphényle, représentée par la formule générale (I) 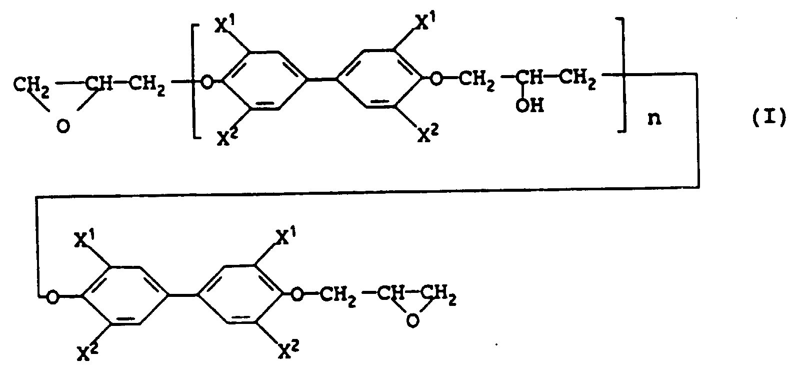 dans laquelle X¹ et X², indépendamment l'un de l'autre, représentent un atome d'hydrogène, un atome d'halogène ou un groupe alkyle en C₁-C₅, et n est un nombre de 0 à 3 en moyenne, (b) 20 à 200 parties en poids d'agent durcisseur phénolique contenant au moins 20% en poids d'un polyphénol pouvant être obtenu par condensation de phénols avec des aldéhydes aromatiques ou des cétones aromatiques possédant des groupes hydroxyle phénoliques, et éventuellement (c) un accélérateur de durcissement, et (d) une charge minérale.

2. Composition selon la revendication 1, dans laquelle le polyphénol de (b) peut être obtenu par une réaction de condensation d'une mole de phénols avec de 0,1 à 3,0 moles, de préférence de 0,2 à 1,0, d'aldéhydes aromatiques ou de cétones aromatiques contenant des groupes hydroxyle phénoliques, en présence d'un catalyseur acide, à une température dans la gamme de 40 à 200°C, pendant une durée de réaction de 1 à 12 heures.

3. Composition selon l'une quelconque des revendications 1 ou 2, dans laquelle le phénol à condenser est choisi parmi le phénol, le crésol, le xylénol, l'éthylphénol, le butylphénol, le phénylphénol, le nonylphénol, le butylcrésol, le bromophénol, le chlorophénol, l'hydroquinone, le résorcinol, le bisphénol A, le bisphénol F et le diphénol.

4. Composition selon l'une quelconque des revendications 1 à 3, dans laquelle l'aldéhyde aromatique ou la cétone aromatique contenant des groupes hydroxyle phénoliques est choisi parmi l'hydroxybenzaldéhyde, le méthylhydroxybenzaldéhyde, le méthoxyhydroxybenzaldéhyde, l'hydroxyacétophénone et l'hydroxyphényléthylcétone.

5. Composition selon l'une quelconque des revendications 1 à 4, dans laquelle on utilise, comme charge minérale, de la poudre de silice.
